# FASCICULE DE BREVET EUROPEEN

(11) **EP 3 309 043 B1**
(45) Date de publication et mention de la délivrance du brevet: **29.05.2019**
(21) Numéro de dépôt: 17196253.3
(22) Date de dépôt: 12.10.2017
(51) Int. Cl.: B62D 1/26, B62D 1/28, G05D 1/02

(54) **SYSTÈME AUTONOME DE TRANSPORT POUR TUNNEL**
AUTONOMES TRANSPORTSYSTEM FÜR TUNNEL
AUTONOMOUS TRANSPORT SYSTEM FOR TUNNEL

(30) Priorité: 17.10.2016 FR 1660022
(43) Date de publication de la demande: 18.04.2018
(73) Titulaire: Metalliance, 71230 Saint Vallier (FR)
(72) Inventeur: COTHENET, Jean-Claude, 71450 BLANZY (FR)
(74) Mandataire: Regimbeau

(56) Documents cités:
- FR-A1- 3 003 229
- US-A- 5 204 814
- US-A1- 2007 219 720
- US-A1- 2015 094 913

## Description

### DOMAINE DE L'INVENTION

La présente invention porte sur un système de transport montés sur pneus qui est destiné à fonctionner dans des zones à forte contrainte d'espace, notamment en tunnel ou en galerie. Plus précisément, l'invention porte sur un train de véhicules, qui peut avoir un fonctionnement réversible et de type monotrace, et destiné à fonctionner au moins partiellement de manière autonome, c'est-à-dire sans l'assistance d'un conducteur.

### ETAT DE LA TECHNIQUE

Le transport de matériaux dans des zones à forte contrainte d'espace, telles que les tunnels ou les galeries, a nécessité le développement de véhicules adaptés pour répondre aux contraintes de déplacement induites, en particulier les contraintes de déplacements courbes, ou encore les manoeuvres de type demi-tour.

Ainsi, pour faciliter le déplacement de trains de véhicules montés sur pneus dans de telles zones à contraintes, il a été développé des trains de véhicule de type « monotrace » dont la conception permet à chacun des éléments du train de véhicules d'emprunter sensiblement la même trajectoire. Pour ce faire, le véhicule de tête comprend un essieu d'entrainement monté en rotation sous le châssis et portant les roues motrices du train de véhicules, tout ou partie des autres essieux du train de véhicules étant en outre également montés en rotation par rapport au châssis sous lequel ils sont fixés, ces essieux étant qualifiés d'essieux de direction. Les essieux de direction sont commandés pour pivoter afin de suivre au plus près la trajectoire courbe imposée par l'essieu d'entrainement, de sorte que l'ensemble du train de véhicules suive sensiblement cette trajectoire spécifique.

Il a également été développé des trains de véhicule à fonctionnement réversible, c'est-à-dire des trains de véhicules comprenant un véhicule de tête et un véhicule de queue pourvus respectivement d'un essieu d'entrainement, permettant de diriger le train de véhicules dans un sens ou dans l'autre sans difficulté. Un tel fonctionnement réversible est particulièrement avantageux dans les zones où la manoeuvre est complexe, notamment lorsqu'il n'est pas possible de faire demi-tour.

La demande de brevet EP 0 968 905 publiée le 5 janvier 2000 propose un train de véhicules dont les caractéristiques permettent à la fois le suivi « monotrace » d'une part et le fonctionnement réversible d'autre part. Plus précisément, il est proposé un train de véhicules dont les véhicules, montés chacun sur des essieux directeurs, sont reliés entre eux par des moyens d'articulation constituant, en outre, des moyens de commande d'orientation des essieux directeurs pour un déplacement de type monotrace du train. Par ailleurs, les deux véhicules placés aux extrémités du train sont du type automoteur à fonctionnement réversible, et peuvent fonctionner de manière simultanée pour faciliter le déplacement du train de véhicule. Il est également proposé dans ce document d'utiliser des moyens de correction de guidage pour que le train de véhicules ait bien un déplacement monotrace, ces moyens de correction consistant en un détecteur d'obstacle placé sur chaque essieu et destiné à détecter un rail placé sur le sol du tunnel, en vue corriger le guidage du véhicule en cas de détection dudit rail. Un tel train de véhicule n'est toutefois pas adapté pour un fonctionnement dans des tunnels ayant de faibles rayons de courbure, tant en ce qui concerne le guidage même du train de véhicule dans de tels tunnels qu'en ce qui concerne également le système proposé pour la correction de ce guidage qui n'est en effet pas adapté à des tunnels à fortes contraintes, présentant notamment des courbes importantes, voire des parois présentant des angles.

Dans la demande de brevet FR 3 003 229 publiée le 19 septembre 2014, il est proposé un train de véhicules permettant à la fois le suivi « monotrace » d'une part et le fonctionnement réversible d'autre part, et pouvant être utilisé dans des tunnels à faibles rayons de courbure et éventuellement des parois à angles. Plus précisément, il est proposé dans ce document de réaliser un système de transport pour tunnel avec au moins un véhicule comprenant au moins trois paires de capteurs de distance, chaque capteur de distance étant prévu pour mesurer la distance entre ledit capteur de distance et une paroi du tunnel, les capteurs de distance de chaque paire de capteurs de distance étant agencés de part et d'autre du châssis par rapport à l'axe longitudinal, et les au moins trois paires de capteurs de distance étant réparties le long du châssis du véhicule. Le système de transport comprend en outre une unité de commande prévue pour commander la rotation des au moins deux essieux du véhicule indépendamment l'une de l'autre en fonction des distances mesurées par au moins trois capteurs de distance des au moins trois paires de capteurs de distance. Le système proposé dans le document FR 3 003 229 est particulièrement avantageux pour automatiser le pilotage du véhicule dans le tunnel, notamment sur sol plat.

Un système de transport pour tunnel monté sur pneus peut être amené, dans un même tunnel, à rouler sur des sols plats, notamment les portions de type « radier », comme sur des sols incurvés, notamment les portions intérieures concaves du tunnel, de type « voussoir». La demande internationale WO 2010/034767 publiée le 1er avril 2010 décrit par exemple un dispositif de transport pour tunnel comportant un carrossage variable auto-adaptatif permettant une circulation du véhicule directement sur les parois intérieures concaves des voussoirs, dans des tunnels de petits diamètres, tout comme sur sol plat, et pouvant passer de l'un à l'autre en totale continuité sans intervention d'actionneurs à cinématique.

Un but de la présente invention est de proposer un système de transport à fonctionnement réversible monotrace, formant par exemple un train de véhicules, et qui permet de résoudre au moins l'un des inconvénients précités.

En particulier, un but de la présente invention est de proposer un système de transport pouvant se déplacer quel que soit le profil du sol sur lequel se déplace ledit système de transport de manière partiellement ou totalement autonome.

Un autre but de la présente invention est de proposer un système de transport pour tunnel pouvant fonctionner dans des conditions avec peu ou pas de visibilité.

Encore un but de la présente invention est de proposer un système de transport pour tunnel pouvant fonctionner dans un mode dégradé permettant d'assurer les fonctions principales dudit système de transport, pour aller notamment d'un point spécifique à un autre, notamment dans des situations d'urgence, comme des incendies dans le tunnel.

### EXPOSE DE L'INVENTION

A cette fin, on propose un système de transport pour tunnel comprenant au moins un véhicule à pneus et une unité de pilotage du véhicule, ledit véhicule ayant un châssis globalement longitudinal et au moins deux essieux montés pivotant sous le châssis à chacune des extrémités du châssis, chaque essieu portant des roues montées sur pneus, et l'unité de pilotage comprenant un dispositif de commande prévue pour commander les au moins deux essieux du véhicule,
caractérisé en ce qu'il comprend une unité de suivi de déplacement comprenant une combinaison d'au moins un dispositif télémétrique et au moins un dispositif inclinométrique, dans lequel le dispositif télémétrique est prévu pour mesurer une distance entre le véhicule et chacune des parois latérales du tunnel, et le dispositif inclinométrique est prévu pour mesurer un angle d'inclinaison entre un axe normal au plan moyen formé par le châssis et la direction de l'attraction terrestre dans un plan frontal dudit véhicule, le dispositif inclinométrique comprenant une pluralité d'inclinomètres, le véhicule ayant au moins un essieu comprenant au moins deux inclinomètres positionnés de façon symétrique par rapport à l'axe longitudinal du véhicule, et en ce que l'unité de pilotage comprend en outre un dispositif de traitement de données pour recevoir et traiter des données de l'unité de suivi de déplacement et pour contrôler le dispositif de commande en fonction des données traitées, le dispositif de traitement de données étant prévu pour coopérer avec le dispositif de commande pour commander au moins une rotation d'au moins un des deux essieux du véhicule en fonction des distances mesurées par le dispositif télémétrique lorsque le système de transport roule sur une portion plate du tunnel et en fonction de l'angle d'inclinaison mesuré par le dispositif inclinométrique lorsque le système de transport roule sur une portion incurvée du tunnel.

Des aspects préférés mais non limitatifs de ce système de transport, pris seuls ou en combinaison, sont les suivants :
- le dispositif télémétrique comprend au moins quatre capteurs de distance, de préférence des capteurs de distance laser, où au moins deux capteurs de distance sont agencés de chaque côté du véhicule au niveau d'une extrémité du châssis de véhicule.
- l'unité de suivi de déplacement comprend en outre un dispositif de détection d'obstacles présents dans une zone de déplacement du système de transport, ledit dispositif de détection d'obstacles comprenant un système de détection courte distance pour une détection d'obstacles présents entre l'extrémité avant du véhicule dans le sens de déplacement et une première distance de détection, et un système de détection longue distance pour une détection d'obstacles présents au-delà de la première distance de détection jusqu'à une deuxième distance de détection.
- la première distance de détection est comprise entre 5 m et 10 m, et est de préférence de 8 m, et la deuxième distance de détection est comprise entre 30 m et 70 m, et est de préférence de 50 m.
- le système de détection courte distance comprend une pluralité de capteurs ultrasons, au moins une partie desdits capteurs ultrasons étant positionnés au niveau de l'extrémité avant du véhicule dans le sens de déplacement.
- le système de détection longue distance comprend un scanner laser bidimensionnel ou tridimensionnel.
- le système de détection longue distance comprend une caméra tridimensionnelle.
- l'unité de suivi de déplacement comprend en outre une combinaison d'au moins un dispositif odométrique et au moins un dispositif inclinométrique supplémentaire, dans lequel le dispositif odométrique est agencé pour mesurer une distance parcourue par ledit véhicule par rapport à un point de référence, et le dispositif inclinométrique supplémentaire est prévu pour mesurer un angle d'inclinaison entre l'axe longitudinal du véhicule et un axe perpendiculaire à la direction de l'attraction terrestre dans un plan sagittal dudit véhicule.
- le dispositif de commande comprend un système d'entrainement pour entrainer des roues d'entrainement portées par au moins un des essieux du véhicule, le dispositif de commande étant en outre prévu pour commander la vitesse d'entrainement des roues d'entrainement en fonction des données issues de l'unité de suivi de déplacement.
- l'unité de pilotage a un fonctionnement entièrement automatisé permettant un pilotage automatique du véhicule en fonction des données de l'unité de suivi de déplacement.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 est une vue de côté d'un système de transport selon l'invention, dans un mode de réalisation à deux véhicules :
- la figure 2 est une vue de dessus du système de transport de la figure 1 ;
- la figure 3 est une vue de côté d'un système de transport selon l'invention, dans un mode de réalisation à un seul véhicule :
- la figure 4 est une vue de dessus du système de transport de la figure 3 ;
- la figure 5 est une vue schématique du système de transport en déplacement dans un tunnel sur sol plat ;
- la figure 6 est une vue schématique du système de transport en déplacement dans un tunnel sur sol concave ;
- la figure 7 est une autre vue schématique du système de transport en déplacement dans un tunnel sur sol concave ;
- la figure 8 est une représentation de la détection d'obstacles avec le système de transport proposé ;

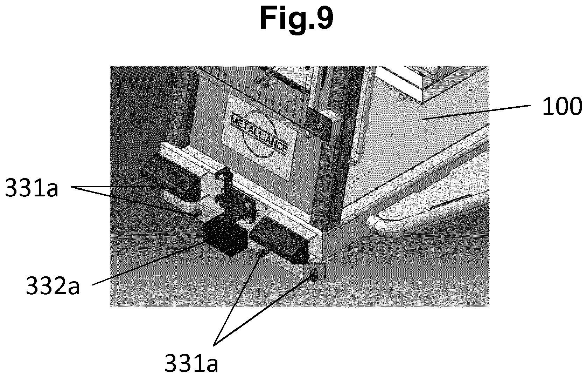

- la figure 9 est une vue de détail illustrant l'agencement des capteurs du dispositif de détection courte distance du système de transport proposé.

### DESCRIPTION DETAILLEE DE L'INVENTION

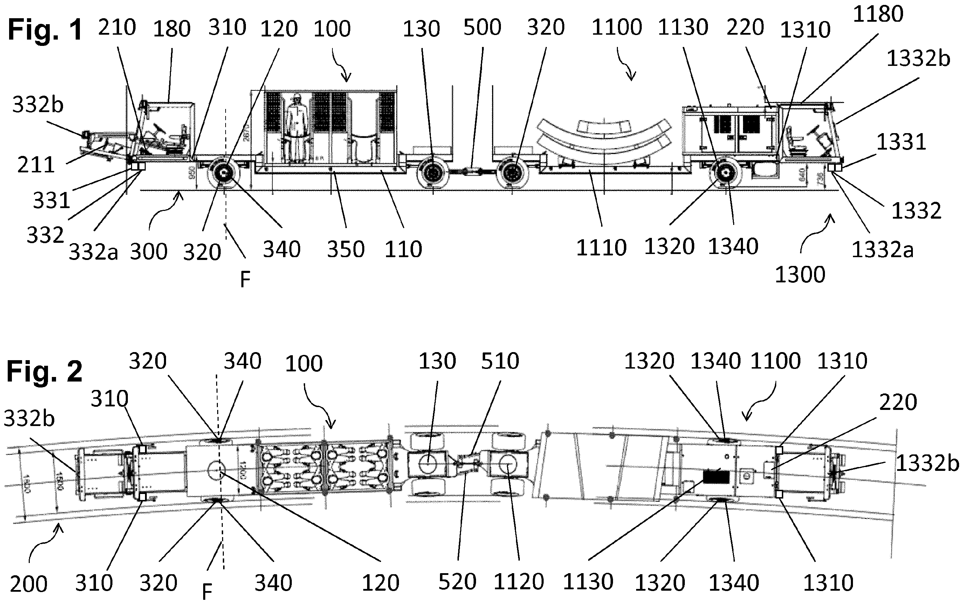

Les figures 1 et 2 illustrent un train de véhicules, plus précisément un train de véhicules sur pneus, utilisé pour le transport de charges dans des zones à fortes contraintes, telles que des tunnels ou des galeries. Un tel train de véhicules est généralement destiné au transport de matériaux ou éléments présentant des volumes importants, notamment de grande longueur, et dont la manutention est particulièrement difficile.

Le train de véhicules présenté aux figures 1 et 2 comprend deux véhicules (100 ; 1100) couplés entre eux par une liaison mécanique (500) permettant une articulation des véhicules (100 ; 1100) l'un par rapport à l'autre. Le train de véhicules présenté est de type bicabine, c'est-à-dire que les deux véhicules (100 ; 1100) situés à chacune des deux extrémités du train de véhicules, appelé véhicule de tête et véhicule de queue respectivement, comprennent chacun une cabine de conduite (180 ; 1180) qui permet de diriger le train de véhicules dans un sens de déplacement du train de véhicules ou dans l'autre. Outre une cabine de conduite, le véhicule de tête et le véhicule de queue comprennent chacun des moyens d'entrainement des roues permettant de transmettre aux roues une certaine motricité pour mettre en mouvement le train de véhicules. Un train de véhicules de type bicabine comprend donc deux cabines de conduite situées aux deux extrémités dudit train de véhicules, qui ont chacune une fonction d'entrainement pour un déplacement dans un sens ou dans un autre du train de véhicules. Les trains de véhicules bicabine se distinguent ainsi nettement des trains de véhicules de type « tracteur + remorqueur » pour lesquels seul le véhicule à l'avant du train de véhicules a une fonction d'entrainement.

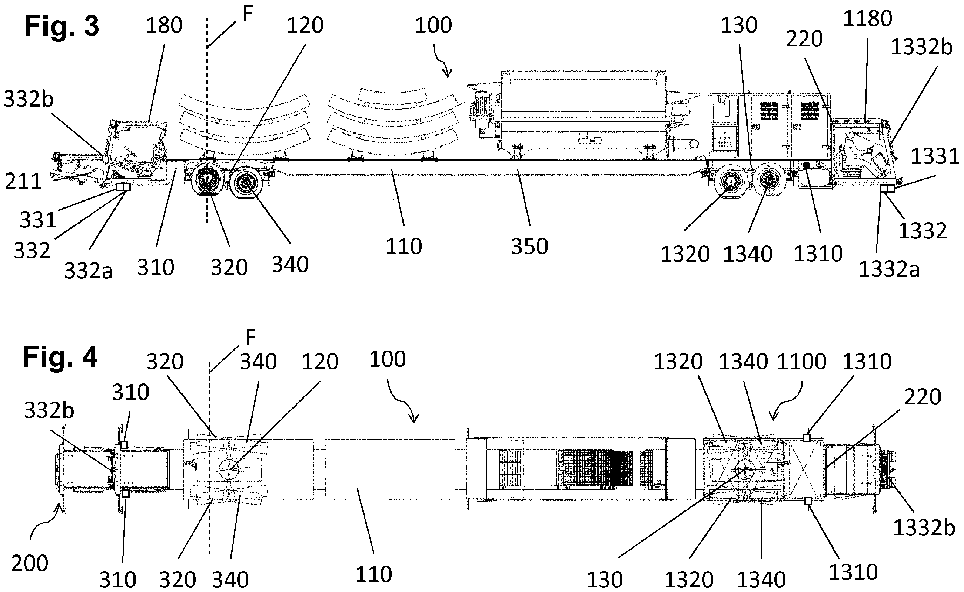

La description qui suit présente principalement un train de véhicules bicabine ayant deux véhicules, c'est-à-dire uniquement un véhicule de tête et un véhicule de queue, sans aucun véhicule intermédiaire interposé entre ces deux véhicules d'extrémité. Les enseignements exposés dans ce texte ne sont toutefois pas limités à de tels systèmes de transport à deux véhicules et sont également applicables à des systèmes de transport comprenant un seul véhicule, comme celui représenté aux figures 3 et 4.

Ces enseignements sont aussi applicables à des systèmes de transport comprenant une pluralité de véhicules, en particulier un train de véhicules bicabine comportant un ou plusieurs véhicules intermédiaires interposés entre le véhicule de tête et le véhicule de queue. L'utilisation de plusieurs véhicules intermédiaires peut notamment être privilégiée lorsque l'on souhaite augmenter la charge transportable, ou pour augmenter les points d'articulation du train de véhicules permettant de suivre des courbes encore plus serrées.

Le système de transport présenté aux figures 1 et 2 comprend donc deux véhicules (100 ; 1100), que l'on peut appeler véhicule de tête 100 et véhicule de queue 1100 respectivement. Le véhicule de tête 100 correspond de préférence au véhicule entrant en premier dans le tunnel lorsque le système de transport va vers le tunnelier, tandis que le véhicule de queue 1100 est celui qui sort le premier du tunnel lorsque le système de transport va du tunnelier vers le puits, c'est-à-dire vers l'extérieur du tunnel.

Chaque véhicule (100 ; 1100) comprend un châssis (110 ; 1110) globalement longitudinal et au moins deux essieux (120,130 ; 1120,1130) montés sous le châssis (110 ; 1110) à chacune des extrémités dudit châssis (110 ; 1110). Chaque essieu porte des roues permettant le déplacement du train de véhicules.

Le châssis (110 ; 1110) comprend de préférence une plateforme longitudinale prévue pour supporter les charges à transporter. Dans le cas de deux véhicules d'extrémité (100 ; 1100) comme illustré aux figures 1 et 2, le châssis (110 ; 1110) est prolongé par un module de conduite (180 ; 1180) permettant de piloter le train de véhicules dans un sens de déplacement ou dans l'autre. De manière préférée, les modules de conduite (180 ; 1180) sont agencés aux extrémités libres des châssis (110 ; 1110) des véhicules d'extrémité (100 ; 1110).

Au moins un des deux essieux (120,130 ; 1120,1130) est monté pivotant sous le châssis (110 ; 1110) correspondant. De préférence, tous les essieux (120,130 ; 1120,1130) sont montés pivotant sous le châssis (110 ; 1110). Il peut également être prévu d'ajouter un ou plusieurs essieux intermédiaires placés entre ces deux essieux d'extrémités.

Chaque essieu (120 ; 130 ; 1120 ; 1130) comprend de préférence un corps longitudinal formant une structure longitudinale de fixation des roues. Le corps longitudinal de chaque essieu est monté pivotant sous le châssis (110 ; 1110) correspondant, de manière parallèle audit châssis, ledit corps longitudinal portant de part et d'autre de son axe longitudinal au moins une roue.

Chaque essieu (120 ; 130 ; 1120 ; 1130) comprend donc au moins une paire de roues qui sont agencées de part et d'autre du corps longitudinal. De préférence, chaque essieu comprend en outre une deuxième paire de roues également agencées de part et d'autre du corps longitudinal.

Chaque roue peut par exemple être montée par une liaison pivot sur une fusée, dite fusée de roue, qui est couplée au corps longitudinal par l'intermédiaire d'un bras de fixation, ce bras de fixation s'étendant de manière transversale par rapport audit corps longitudinal. De préférence, le bras de fixation et la fusée de roue sont couplés au corps longitudinal de manière à ce que la roue qui leur est associée puisse pivoter selon un axe parallèle à l'axe longitudinal défini par le corps allongé. Une telle configuration permet aux roues de pouvoir être inclinées en fonction de la concavité du sol, ce qui est particulièrement avantageux pour l'utilisation du train de véhicules directement sur le sol concave formé par le voussoir du tunnel.

Pour adapter spécifiquement l'inclinaison des roues au profil du sol, chaque essieu peut en outre comporter des moyens prévus pour faire pivoter les roues portées par ledit essieu depuis une première position verticale lorsque les roues prennent appui sur un sol plat jusqu'à une seconde position inclinée lorsque les roues prennent appui sur le sol concave d'un tunnel ou similaire, lesdites roues s'étendant sur la normale du cercle décrit par le tunnel, et inversement. Un tel pivotement des roues peut être commandé de manière électronique, hydraulique, ou peut même fonctionner sous l'effet du poids de l'ensemble. On peut par exemple se référer à la demande PCT publiée le 1^{er} avril 2010 sous la référence WO 2010/034767 pour un descriptif plus détaillé d'un agencement sur un essieu de roues inclinables sous l'effet du poids du dispositif.

Il est à noter que de manière alternative, l'essieu peut être monté sur une couronne de direction, actionnée par exemple par un vérin hydraulique. Dans ce cas, le carrossage peut également être fixe ou articulé.

Comme on l'a indiqué plus haut, chaque essieu (120 ; 130 ; 1120 ; 1130) est de préférence monté en rotation par rapport au châssis (100 ; 1100) correspondant. Dans ce cas, le corps longitudinal de chaque essieu est couplé au châssis (100 ; 1100) par l'intermédiaire d'un axe de couplage de sorte que l'essieu a une fonction de direction dans le déplacement du train de véhicules. En effet, chaque essieu (120 ; 130 ; 1120 ; 1130) peut avoir une position angulaire spécifique par rapport au châssis (100; 1100) correspondant, participant ainsi au déplacement monotrace du train de véhicules. Un tel essieu pouvant pivoter par rapport au châssis est qualifié d'essieu de direction puisqu'il participe au suivi de la trajectoire monotrace. De préférence, la rotation de chaque essieu de direction peut être commandée pour le laisser flottant, c'est-à-dire en rotation libre, ou pour le maintenir dans une position angulaire déterminée, par exemple centrée par rapport à l'axe du châssis.

Parmi les au moins deux essieux (120,130 ; 1120,1130) de chaque véhicule d'extrémité (100 ; 1100), l'un d'eux au moins est un essieu d'entrainement (120 ; 1130), c'est-à-dire un essieu de direction qui porte au moins une roue motrice permettant de mettre en mouvement ledit véhicule d'extrémité (100 ; 1100). Chaque essieu d'entrainement (120 ; 1130) comprend donc au moins une roue motrice pouvant être mise en mouvement par un système d'entrainement 211 adapté, ledit système d'entrainement comprenant par exemple un moteur électrique ou un moteur hydraulique alimenté par une pompe hydraulique.

Le système d'entrainement 211 est de préférence débrayable ce qui permet de désactiver la roue motrice de l'essieu d'entrainement (120 ; 1130) et la transformer en roue libre, transformant ainsi l'essieu d'entrainement (120 ; 1130) en un simple essieu de direction. De manière générale, seul l'un des deux véhicules d'extrémité (100 ; 1100) exerce réellement une fonction d'entrainement (ce véhicule étant le véhicule d'extrémité placé à l'avant du train de véhicules dans le sens de déplacement) avec un système d'entrainement 211 activé pour mettre en mouvement la au moins une roue motrice de l'essieu d'entrainement. Dans ce cas, le système d'entrainement 211 de l'essieu d'entrainement de l'autre véhicule d'extrémité est débrayé, les roues fonctionnant ainsi en roue libre, et le véhicule d'extrémité correspondant se comportant donc comme un véhicule suiveur tracté par le véhicule d'extrémité avant. Le débrayage du système d'entrainement 211 pourra également être utilisé en cas de panne du système de transport, par exemple pour pouvoir assurer la traction de l'engin en panne.

De préférence encore, un essieu d'entrainement (120 ; 1130) comprend deux roues motrices actionnées par les moyens d'entrainement. Dans le cas où l'essieu d'entrainement comprend quatre roues, il peut être envisagé que seules deux des quatre roues soient motrices, les deux autres roues étant laissées libres. Dans ce dernier cas, les deux roues motrices sont placées de part et d'autre du corps longitudinal de l'essieu, ces deux roues motrices pouvant être placées en regard l'une de l'autre, ou pouvant alternativement être placées selon une configuration diagonale où chaque roue motrice fait face à une roue libre.

De préférence, les essieux du ou des véhicules composant le système de transport sont indépendants les uns des autres, ce qui est particulièrement avantageux pour une utilisation dans des tunnels à fortes contraintes, c'est-à-dire des tunnels étroits, avec des rayons de courbure faibles. En effet, cela permet si nécessaire de piloter le système de transport en commandant la rotation des différents essieux indépendamment les uns des autres.

Pour ce faire, le système de transport comprend une unité de pilotage 200 comprenant un dispositif de commande 210 pour commander les essieux des véhicules, notamment leur position angulaire, selon la trajectoire des véhicules et leur positionnement dans le tunnel.

Le dispositif de commande 210 comprend donc un système de mise en rotation des essieux et/ou des roues portées par les essieux. Il intègre aussi de préférence le système d'entrainement 211 pour entrainer les roues d'entrainement portées par au moins un des essieux (120,130) du véhicule 100. Le dispositif de commande 210 est en outre prévu pour commander la vitesse d'entrainement des roues d'entrainement en fonction de données mesurées portant sur la situation du système de transport, par exemple sur le positionnement ou le déplacement des véhicules.

Comme il ressortira plus précisément de la suite de la description, l'unité de pilotage 200 peut avoir un fonctionnement entièrement automatique sans aucune intervention du conducteur du système de transport, un fonctionnement semi-automatique où le conducteur commande certaines fonctions de positionnement ou motorisation, ou encore une fonctionnement entièrement manuel par le conducteur, auquel cas l'unité de pilotage peut apporter des information nécessaires à une bonne conduite par le conducteur.

Pour que la rotation de chaque essieu puisse être actionnée indépendamment les uns des autres, le système de transport - lorsqu'il comprend une pluralité de véhicules - comprend, entre deux véhicules adjacents, une liaison mécanique 500 permettant d'éviter que la rotation d'un véhicule impose une rotation au véhicule adjacent. A cet égard, la liaison mécanique 500 peut comprendre deux bras d'articulation (510 ; 520) ayant chacun un pivot, c'est-à-dire deux timons positionnés entre deux essieux adjacents de deux véhicules adjacents. De préférence, chaque timon (510 ; 520) peut être soit bloqué soit laissé libre, ce qui permet la rotation.

La rotation de chaque essieu de chaque véhicule est généralement commandée de manière à empêcher tout contact entre ledit véhicule et les parois latérales du tunnel dans lequel le système de transport circule. Par exemple, les essieux sont pilotés selon une stratégie de centrage du véhicule qui maintient le véhicule sensiblement au centre du tunnel, pour éviter tout contact avec les parois latérales du tunnel.

Une contrainte est de pouvoir appliquer une stratégie de déplacement, par exemple une stratégie de centrage de véhicule, quel que soit le profil du sol sur lequel se déplace le train de véhicules. En particulier, on cherche à avoir un système de transport dont la trajectoire est contrôlée et maitrisée qu'il se déplace sur un sol plat, comme par exemple sur un radier, ou qu'il se déplace sur un sol concave, par exemple directement sur la paroi intérieur d'un voussoir.

A cette fin, le système de transport est doté d'une unité de suivi de déplacement 300 comprenant une combinaison d'au moins un dispositif télémétrique 310 et au moins un dispositif inclinométrique 320.

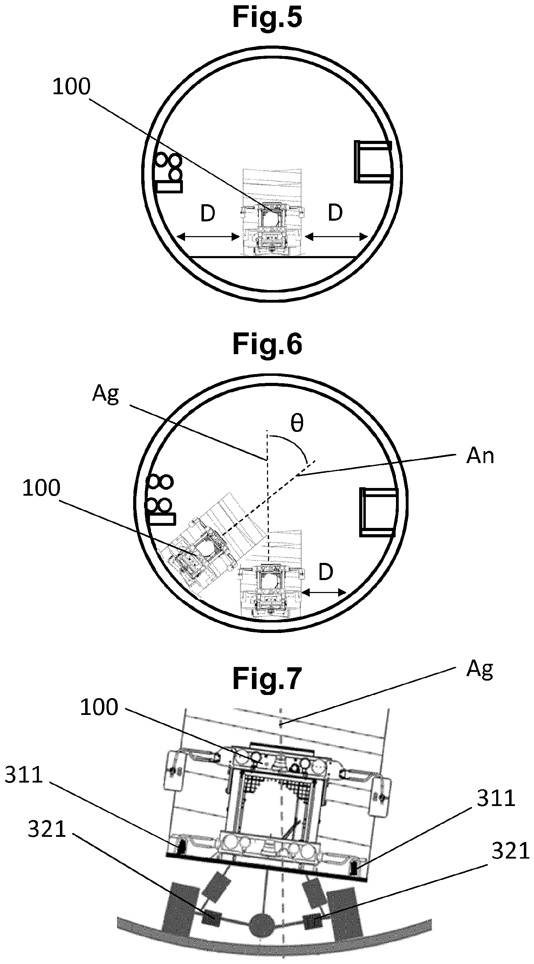

Comme illustré schématiquement à la figure 5, le dispositif télémétrique 310 est prévu pour mesurer une distance D entre le véhicule 100 et chacune des parois latérales du tunnel. Cette distance D mesurée de préférence selon une direction perpendiculaire à l'axe longitudinale du châssis et dans le plan moyen dudit châssis.

Un tel dispositif télémétrique 310 est particulièrement avantageux pour évaluer le positionnement du véhicule 100 lors d'un déplacement sur sol plat où la distance D entre le véhicule 100 et les parois peut varier.

Comme illustré schématiquement à la figure 6, le dispositif inclinométrique 320 est quant à lui prévu pour mesurer un angle θ d'inclinaison entre un axe normal (An) au plan moyen formé par le châssis et la direction (Ag) de l'attraction terrestre dans un plan frontal (F) dudit véhicule (100).

Un tel dispositif inclinométrique 320 est particulièrement avantageux pour évaluer le positionnement du véhicule 100 lors d'un déplacement sur sol incurvée, notamment concave dans un voussoir, où la distance D entre le véhicule 100 et les parois ne varie pas mais où l'inclinaison du véhicule 100 par rapport à la verticale, définie comme la direction d'attraction terrestre, peut varier au cours du déplacement si le véhicule 100 dévie de sa trajectoire.

L'association du dispositif télémétrique 310 et du dispositif inclinométrique 320 permet d'assurer un suivi de la trajectoire du système de transport quel que soit le profil du sol sur lequel se déplace le train de véhicule, en particulier aussi bien sur sol plat que sur sol concave, le train de véhicules pouvant donc sans difficulté passer d'un profil de sol à un autre, sans perturbation du suivi de la trajectoire.

L'unité de pilotage 200 comprend un dispositif de traitement de données 220, positionné de préférence sur l'un des véhicules du train de véhicules, et prévu pour recevoir et traiter des données de l'unité de suivi de déplacement 300 et pour contrôler le dispositif de commande 210 en fonction des données traitées afin de contrôler et éventuellement corriger la trajectoire du train de véhicules.

Ce dispositif de traitement 220 peut par exemple être un ordinateur ayant un processeur avec une puissance de traitement suffisante pour les calculs des données issues des différents capteurs de l'unité de suivi de déplacement 300.

Le dispositif de traitement de données 220 est spécifiquement prévu pour coopérer avec le dispositif de commande 210 afin de commander au moins une rotation d'au moins un des deux essieux (120,130) du véhicule 100 en fonction des distances mesurées par le dispositif télémétrique 310 lorsque le système de transport roule sur un sol plat, par exemple une portion de radier du tunnel, et en fonction de l'angle d'inclinaison mesuré par le dispositif inclinométrique 320 lorsque le système de transport roule sur une portion incurvée concave, par exemple une portion de voussoir du tunnel.

Le dispositif télémétrique 310 comprend de préférence plusieurs capteurs de distance 311 qui sont agencés pour mesurer une distance D entre le véhicule et la paroi du tunnel ou tout élément positionné latéralement par rapport au véhicule, comme par exemple des systèmes annexes à proximité des parois du tunnel (par exemple tuyaux, ventilations, etc.).

Ces capteurs de distance 311 sont par exemple des capteurs de distance laser. Il pourra par exemple être utilisé des télémètres laser DX35 de la société SICK.

Comme illustré à la figure 7, le dispositif télémétrique 310 comprend de préférence au moins deux capteurs de distance qui sont agencés de chaque côté du véhicule 100, par exemple au niveau d'une extrémité du châssis 110 de véhicule 100. De préférence encore, chaque véhicule comprend au moins deux paires de capteurs de distance, par exemple agencés de chaque côté du véhicule 100 au niveau de chaque extrémité du châssis 110. Les deux paires de capteurs de distance peuvent également être agencés de chaque côté du véhicule 100 au niveau d'une des extrémités du châssis 110 du véhicule 100, par exemple l'extrémité libre pour un véhicule de tête.

De préférence, le dispositif inclinométrique 320 comprend une pluralité d'inclinomètres 321. Il pourra par exemple être utilisé des inclinomètres EC2082 de la société IFM electronic GmbH.

Un inclinomètre est un dispositif permettant de mesurer une inclinaison par rapport à un axe de référence, c'est-à-dire l'angle formé par l'axe de référentiel de l'inclinomètre et l'axe de référence.

Dans le dispositif inclinométrique 320, les inclinomètres 321 sont fixés au véhicule de manière à pouvoir mesurer l'inclinaison du véhicule par rapport à la verticale, c'est-à-dire par rapport à la direction de l'attraction terrestre (Ag).

Par exemple, comme illustré à la figure 7, le véhicule 100 a au moins un essieu comprenant au moins deux inclinomètres 321 positionnés de façon symétrique par rapport à l'axe longitudinal du véhicule 100.

Le fait d'avoir au moins deux inclinomètres 321 sur le véhicule 100 permet d'avoir une précision accrue quant à l'inclinaison du véhicule 100 sur un sol concave de type voussoir. On pourrait toutefois également avoir un unique inclinomètre 321 agencé pour fournir les informations requise pour repositionner le véhicule 100 dans sa zone d'évolution dans le voussoir dans lequel il se déplace.

Afin d'augmenter la capacité de déplacement du train de véhicules de façon autonome, l'unité de suivi de déplacement 300 peut en outre comprendre, de manière additionnelle ou alternative, un dispositif de détection d'obstacles 330, adapté pour détecter tous objets assimilés à des obstacles (par exemple des débris, du matériel de construction, etc.) présents dans une certaine zone de déplacement du système de transport

Pour ce faire, le dispositif de détection d'obstacles 330 comprend l'association d'un système de détection courte distance 331 pour une détection d'obstacles présents entre l'extrémité avant du véhicule 100 dans le sens de déplacement et une première distance de détection (D1), et un système de détection longue distance 332 pour une détection d'obstacles présents au-delà de la première distance de détection (D1) jusqu'à une deuxième distance de détection (D2).

Par exemple, la première distance de détection (D1) est comprise entre 5 m et 10 m, et est de préférence de 8 m

La deuxième distance de détection (D2) est comprise entre 30 m et 70 m, et est de préférence de 50 m.

Le système de détection courte distance 331 est prévu pour couvrir un premier champ de détection (Detec1) s'étendant longitudinalement à partir de l'extrémité libre du véhicule de tête sur une longueur D1 dans le sens de déplacement du train de véhicules.

De préférence, le champ de détection (Detec1) du système de détection courte distance 331 s'étendant également latéralement, c'est-à-dire en direction des parois du tunnel de manière à permettre une détection d'obstacles sur toute la largeur du tunnel.

Le système de détection longue distance 332 peut être prévu pour détecter tout obstacle présent dans un deuxième champ de détection (Detec2) qui chevauche en tout ou en partie le premier champ de détection (Detec1).

Selon une configuration, le système de détection longue distance 332 est en effet prévu pour couvrir un deuxième champ de détection (Detec2) s'étendant longitudinalement à partir de l'extrémité libre du véhicule de tête sur une longueur D2 dans le sens de déplacement du train de véhicules.

Selon une autre configuration préférée, la zone de recouvrement des champs de détection est minime comme illustré à la figure 7. Par exemple, le système de détection longue distance 332 est prévu pour couvrir un deuxième champ de détection (Detec2) s'étendant longitudinalement à partir de l'extrémité du premier champ de détection (Detect1), c'est-à-dire sensiblement à partir d'une distance D1 de l'extrémité libre du véhicule de tête, et jusqu'à une distance D2.

Le deuxième champ de détection (Detec2) du système de détection longue distance 332 s'étend aussi de préférence latéralement en direction des parois du tunnel.

De préférence, le système de détection courte distance 331 et système de détection longue distance 332 comprennent des technologies de détection différentes. Ainsi, cela permet d'avoir une certaine redondance dans la détection et fiabilise donc le fonctionnement autonome du train de véhicules. En particulier, cela permet de garantir une détection des obstacles même si l'un des systèmes de détection venait à défaillir, à cause d'une panne par exemple, ou encore si les conditions à l'intérieur du tunnelier empêchait l'un des modes de détection, ce qui peut arriver notamment si un incendie se déclenche dans le tunnelier.

Le fait d'avoir deux systèmes de détection couvrant deux champs de détection sensiblement distincts permet également de fiabiliser la détection en tant que telle et de gagner en réactivité dans le processus de détection. En effet, les deux champs de détection sont analysés en parallèle par les deux systèmes de détection, ce qui permet de couvrir un champ de détection étendu sans diminuer le temps de détection.

Selon un mode de réalisation, le système de détection longue distance 332 comprend un scanner 332a, qui peut être bidimensionnel (2D) ou tridimensionnel (3D), à technologie laser par exemple. Il pourra par exemple être utilisé le scanner LD-MRS de la société SICK.

L'utilisation d'un scanner en tant que système de détection longue distance 332 permet de découper le deuxième champ de détection en des plans successifs de détection. La distinction entre le sol et un éventuel obstacle se fait en analysant la linéarité des distances de détection des points entre les plans. Une telle analyse est semblable à une analyse tout-ou-rien et est donc très rapide puisqu'il n'y a pas ou peu de traitement de données nécessaire.

Le système de détection longue distance 332 peut en outre comprendre, en complément ou remplacement du scanner 332a, une caméra 332b, de préférence tridimensionnelle (3D). Une caméra 332b présente l'avantage d'avoir un champ de détection plus fin mais les temps pour la détection et l'analyse correspondante peuvent être un peu plus longs qu'avec un scanner. Un exemple de caméra 332b utilisable est par exemple la caméra multifonction MPC2 développée par la société BOSCH.

Dans le cas où le système de détection longue distance 332 comprend une caméra 332b, cette dernière peut également être utilisée à distance par un poste de contrôle chargé de suivre le déplacement du train de véhicules, notamment lorsque ce dernier est en fonctionnement entièrement autonome,

Le système de détection courte distance 331 peut quant à lui comprendre une pluralité de capteurs ultrasons 331a. Il pourra par exemple être utilisé les capteurs UM30 de la société SICK.

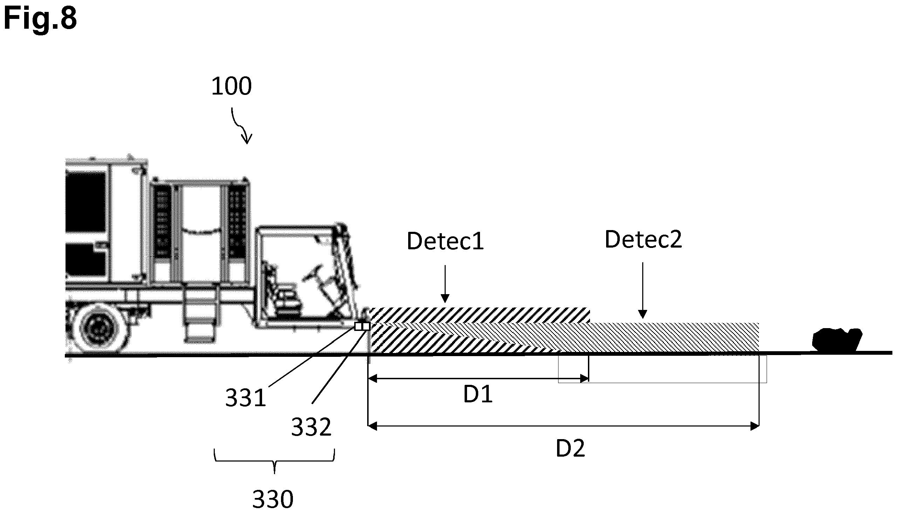

Comme illustré à la figure 8, au moins une partie desdits capteurs ultrasons 331a sont de préférence positionnés au niveau de l'extrémité avant du véhicule 100 dans le sens de déplacement du train de véhicules.

Selon le mode de réalisation illustré à la figure 8, le système de détection courte distance 331 comprend au moins deux capteurs ultrasons 331a positionnés centralement et orientés de manière à faire une détection dans le sens de déplacement du véhicule 100, c'est-à-dire selon l'axe longitudinal du véhicule 100.

Le système de détection courte distance 331 comprend en outre au moins deux capteurs ultrasons 331a positionnés latéralement, de part et d'autre du châssis 110 du véhicule 100, et positionné selon un angle oblique par rapport à la l'axe longitudinal du véhicule 100, par exemple un angle compris entre 20° et 60°, de préférence un angle de 45°.

Selon le mode de réalisation illustré à la figure 8, le système de détection courte distance 331 comprend donc quatre capteurs ultrasons 331a qui fonctionnent selon 4 plans de détection distincts, l'angle total d'ouverture des plans de détection étant compris entre 80° et 90°, de préférence de l'ordre de 85°.

Comme pour le scanner 332a les capteurs ultrasons 331a fonctionnent selon un algorithme de détection tout-ou-rien ce qui est donc très rapide puisque pas ou peu de traitement de données est nécessaire.

De préférence, les capteurs ultrasons 331a fonctionnent par intermittence, les uns après les autres, de sorte à éviter les interférences éventuelles. La fréquence de détection est toutefois très élevée notamment en regard de la vitesse de déplacement du véhicule et ce fonctionnement par intermittence ne vient donc pas perturber la détection d'obstacles.

L'unité de suivi de déplacement 300 peut en outre comprendre, de manière additionnelle ou alternative, une combinaison d'au moins un dispositif odométrique 340 et au moins un dispositif inclinométrique supplémentaire 350, afin notamment d'obtenir des informations sur la position longitudinale du véhicule 100 au sein du tunnel, y compris lorsque les systèmes de localisation plus sophistiqués ne peuvent plus fonctionner, notamment en cas d'incendie dans le tunnel.

Le dispositif odométrique 340 est agencé pour mesurer une distance parcourue par ledit véhicule 100 par rapport à un point de référence. Il peut par exemple comprendre un ou plusieurs codeurs incrémental positionné sur une ou plusieurs roues du véhicules, de sorte à connaître la distance parcourue et donc connaitre la position exacte par rapport au point de référence. De préférence, chaque codeur incrémental est placé sur une roue non motrice pour éviter d'avoir des erreurs qui pourraient être dues au patinage de la roue motrice.

Le dispositif inclinométrique supplémentaire 350 est quant à lui prévu pour mesurer un angle d'inclinaison entre l'axe longitudinal du véhicule 100 et un axe perpendiculaire à la direction de l'attraction terrestre dans un plan sagittal dudit véhicule 100.

L'information du dispositif inclinométrique supplémentaire 350 sur l'inclinaison longitudinale du véhicule le long de son parcours vient compléter l'information sur la distance parcourue donnée par le dispositif odométrique 340 et permet donc de connaitre la position longitudinale avec une meilleure précision.

Le dispositif inclinométrique supplémentaire 350 comprend un ou plusieurs inclinomètres positionnés sur le châssis 110 du véhicule 100. Il pourra par exemple être utilisé des inclinomètres EC2082 de la société IFM electronic GmbH.

Le dispositif de traitement de données 220 de l'unité de pilotage 200 comprend de préférence des moyens d'émission-réception de données pour permettre une communication entre le train de véhicules et le poste de contrôle généralement placé à l'extérieur du tunnel.

La communication entre le poste de contrôle et le train de véhicules est par exemple réalisée par l'utilisation d'une technologie de communication sans fil, par exemple la technologie WiFi 5Ghz. Pour ce faire, des bornes de communication sans fil, de type Wifi, sont placées dans le tunnel, à intervalles réguliers, de manière à permettre une transmission des données.

Comme indiqué plus haut, le dispositif de commande 210 du véhicule 100 comprend un système de mise en rotation des essieux et/ou des roues portées par les essieux et un système d'entrainement 211 pour entrainer les roues d'entrainement du véhicule 100. A cet égard, le dispositif de commande 210 comprend différents actionneurs pouvant être commandés directement par dispositif de traitement de données 220 en fonction des données traitées.

De cette manière, grâce aux différentes données récupérées par les capteurs de l'unité de suivi de déplacement 300 et traitées par le dispositif de traitement de données 220, le dispositif de commande 210 permet au train de véhicule de se déplacer de manière autonome y compris lorsque les conditions dans le tunnel sont dégradées, par exemple en cas d'incendie.

L'agencement proposé permet en effet de gérer en particulier la vitesse du train de véhicules, l'orientation des roues directrices, le freinage et l'accélération des roues motrices, l'anti-patinage des roues motrices.

En outre, l'utilisation de l'unité de suivi de déplacement 300 couplé à l'unité de commande 200 pour automatiser les fonctions importantes de gestion du déplacement du train de véhicules est avantageuse en ce qu'elle permet de gagner en réactivité, notamment par rapport à un système manuel. Cela permet donc d'augmenter la sécurité du fonctionnement du train de véhicules, notamment en cas de freinage d'urgence nécessaire.

### REFERENCES BIBLIOGRAPHIQUES

- EP 0 968 905
- FR 3 003 229
- WO 2010/034767

## Revendications

1. Système de transport pour tunnel comprenant au moins un véhicule (100) à pneus et une unité de pilotage (200) du véhicule (100), ledit véhicule (100) ayant un châssis (110) globalement longitudinal et au moins deux essieux (120,130) montés pivotant sous le châssis (110) à chacune des extrémités du châssis, chaque essieu portant des roues montées sur pneus, et l'unité de pilotage (200) comprenant un dispositif de commande (210) prévue pour commander les au moins deux essieux (120,130) du véhicule (100), **caractérisé en ce qu'**il comprend une unité de suivi de déplacement (300) comprenant une combinaison d'au moins un dispositif télémétrique (310) et au moins un dispositif inclinométrique (320), dans lequel le dispositif télémétrique (310) est prévu pour mesurer une distance entre le véhicule (100) et chacune des parois latérales du tunnel, et le dispositif inclinométrique (320) est prévu pour mesurer un angle d'inclinaison entre un axe normal au plan moyen formé par le châssis et la direction de l'attraction terrestre dans un plan frontal dudit véhicule (100), le dispositif inclinométrique (320) comprenant une pluralité d'inclinomètres (321), le véhicule (100) ayant au moins un essieu (120,130) comprenant au moins deux inclinomètres (321) positionnés de façon symétrique par rapport à l'axe longitudinal du véhicule (100),
et **en ce que** l'unité de pilotage (200) comprend en outre un dispositif de traitement de données (220) pour recevoir et traiter des données de l'unité de suivi de déplacement (300) et pour contrôler le dispositif de commande (210) en fonction des données traitées, le dispositif de traitement de données (220) étant prévu pour coopérer avec le dispositif de commande (210) pour commander au moins une rotation d'au moins un des deux essieux (120,130) du véhicule (100) en fonction des distances mesurées par le dispositif télémétrique (310) lorsque le système de transport roule sur une portion plate du tunnel et en fonction de l'angle d'inclinaison mesuré par le dispositif inclinométrique (320) lorsque le système de transport roule sur une portion incurvée du tunnel.

2. Système de transport selon la revendication 1, dans lequel le dispositif télémétrique (310) comprend au moins quatre capteurs de distance (311), de préférence des capteurs de distance laser, où au moins deux capteurs de distance (311) sont agencés de chaque côté du véhicule (100) au niveau d'une extrémité du châssis (110) de véhicule (100).

3. Système de transport selon l'une quelconque des revendications 1 et 2, dans lequel l'unité de suivi de déplacement (300) comprend en outre un dispositif de détection d'obstacles (330) présents dans une zone de déplacement du système de transport, ledit dispositif de détection d'obstacles (330) comprenant un système de détection courte distance (331) pour une détection d'obstacles présents entre l'extrémité avant du véhicule (100) dans le sens de déplacement et une première distance de détection (D1), et un système de détection longue distance (332) pour une détection d'obstacles présents au-delà de la première distance de détection (D1) jusqu'à une deuxième distance de détection (D2).

4. Système de transport selon la revendication 3, dans lequel la première distance de détection (D1) est comprise entre 5 m et 10 m, et est de préférence de 8 m, et la deuxième distance de détection (D2) est comprise entre 30 m et 70 m, et est de préférence de 50 m.

5. Système de transport selon l'une quelconque des revendications 3 et 4, dans lequel le système de détection courte distance (331) comprend une pluralité de capteurs ultrasons, au moins une partie desdits capteurs ultrasons étant positionnés au niveau de l'extrémité avant du véhicule (100) dans le sens de déplacement.

6. Système de transport selon l'une quelconque des revendications 3 à 5, dans lequel le système de détection longue distance (332) comprend un scanner (332a) laser bidimensionnel (2D) ou tridimensionnel (3D).

7. Système de transport selon l'une quelconque des revendications 3 à 6, dans lequel le système de détection longue distance (332) comprend une caméra (332b) tridimensionnelle (3D).

8. Système de transport selon l'une quelconque des revendications 1 à 7, dans lequel l'unité de suivi de déplacement (300) comprend en outre une combinaison d'au moins un dispositif odométrique (340) et au moins un dispositif inclinométrique supplémentaire (350), dans lequel le dispositif odométrique (340) est agencé pour mesurer une distance parcourue par ledit véhicule (100) par rapport à un point de référence, et le dispositif inclinométrique supplémentaire (350) est prévu pour mesurer un angle d'inclinaison entre l'axe longitudinal du véhicule (100) et un axe perpendiculaire à la direction de l'attraction terrestre dans un plan sagittal dudit véhicule (100).

9. Système de transport selon l'une quelconque des revendications 1 à 8, dans lequel le dispositif de commande (210) comprend un système d'entrainement (211) pour entrainer des roues d'entrainement portées par au moins un des essieux (120,130) du véhicule (100), le dispositif de commande (210) étant en outre prévu pour commander la vitesse d'entrainement des roues d'entrainement en fonction des données issues de l'unité de suivi de déplacement (300).

10. Système de transport selon l'une quelconque des revendications 1 à 9, dans lequel l'unité de pilotage (200) a un fonctionnement entièrement automatisé permettant un pilotage automatique du véhicule (100) en fonction des données de l'unité de suivi de déplacement (300).

## Patentansprüche

1. Transportsystem für Tunnel, umfassend mindestens ein Fahrzeug (100) mit Reifen und eine Lenkeinheit (200) des Fahrzeugs (100), wobei das Fahrzeug (100) einen allgemein länglichen Rahmen (110) und mindestens zwei Achsen (120, 130) hat, die unter dem Rahmen (110) an jedem der Enden des Rahmens schwenkend angebracht sind, wobei jede Achse Räder trägt, die auf Reifen angebracht sind, und die Lenkeinheit (200) eine Steuervorrichtung (210) umfasst, die vorgesehen ist, um die mindestens zwei Achsen (120, 130) des Fahrzeugs (100) zu steuern,
**dadurch gekennzeichnet, dass** es eine Verlagerungsverfolgungseinheit (300) umfasst, umfassend eine Kombination aus mindestens einer Fernmessvorrichtung (310) und mindestens einer Neigungsmessvorrichtung (320), wobei die Fernmessvorrichtung (310) vorgesehen ist, um eine Distanz zwischen dem Fahrzeug (100) und jeder der Seitenwände des Tunnels zu messen, und die Neigungsmessvorrichtung (320) vorgesehen ist, um einen Neigungswinkel zwischen einer zur mittleren Ebene normalen Achse, gebildet von dem Rahmen und der Richtung der Erdanziehungskraft in einer frontalen Ebene des Fahrzeugs (100) zu messen, wobei die Neigungsmessvorrichtung (320) eine Vielzahl von Neigungsmessern (321) umfasst, wobei das Fahrzeug (100) mindestens eine Achse (120, 130) hat, die mindestens zwei Neigungsmesser (321) aufweist, die symmetrisch in Bezug auf die Längsachse des Fahrzeugs (100) positioniert sind,
und dass die Lenkeinheit (200) ferner eine Datenverarbeitungsvorrichtung (220) umfasst, um Daten von der Verlagerungsverfolgungseinheit (300) zu empfangen und zu verarbeiten und um die Steuervorrichtung (210) in Abhängigkeit von den verarbeiteten Daten zu kontrollieren, wobei die Datenverarbeitungsvorrichtung (220) vorgesehen ist, um mit der Steuervorrichtung (210) zusammenzuwirken, um mindestens eine Rotation von mindestens einer der zwei Achsen (120, 130) des Fahrzeugs (100) in Abhängigkeit von den Distanzen, gemessen von der Fernmessvorrichtung (310), wenn das Transportsystem über einen flachen Abschnitt des Tunnels fährt, und in Abhängigkeit vom Neigungswinkel, gemessen von der Neigungsmessvorrichtung (320), wenn das Transportsystem über einen gekrümmten Abschnitt des Tunnels fährt, zu steuern.

2. Transportsystem nach Anspruch 1, wobei die Fernmessvorrichtung (310) mindestens vier Distanzsensoren (311), vorzugsweise Laser-Distanzsensoren, umfasst, wobei mindestens zwei Distanzsensoren (311) auf jeder Seite des Fahrzeugs (100) im Bereich eines Endes des Rahmens (110) eines Fahrzeugs (100) eingerichtet sind.

3. Transportsystem nach einem der Ansprüche 1 und 2, wobei die Verlagerungsverfolgungseinheit (300) ferner eine Detektionsvorrichtung von Hindernissen (330) umfasst, die in einer Verlagerungszone des Transportsystems vorhanden sind, wobei die Detektionsvorrichtung von Hindernissen (330) ein Kurzdistanz-Detektionssystem (331) für eine Detektion von Hindernissen umfasst, die zwischen dem vorderen Ende des Fahrzeugs (100) in der Verlagerungsrichtung und einer ersten Detektionsdistanz (D1), und ein Langdistanz-Detektionssystem (332) für eine Detektion von Hindernissen, die jenseits der ersten Detektionsdistanz (D1) bis zu einer zweiten Detektionsdistanz (D2) vorhanden sind.

4. Transportsystem nach Anspruch 3, wobei die erste Detektionsdistanz (D1) zwischen 5 m und 10 m liegt und vorzugsweise 8 m beträgt und die zweite Detektionsdistanz (D2) zwischen 30 m und 70 m liegt und vorzugsweise 50 m beträgt.

5. Transportsystem nach einem der Ansprüche 3 und 4, wobei das Kurzdistanz-Detektionssystem (331) eine Vielzahl von Ultraschallsensoren umfasst, wobei mindestens ein Teil der Ultraschallsensoren im Bereich des vorderen Endes des Fahrzeugs (100) in der Verlagerungsrichtung positioniert ist.

6. Transportsystem nach einem der Ansprüche 3 bis 5, wobei das Langdistanz-Detektionssystem (332) einen zweidimensionalen (2D) oder dreidimensionalen (3D) Laserscanner (332a) umfasst.

7. Transportsystem nach einem der Ansprüche 3 bis 6, wobei das Langdistanz-Detektionssystem (332) eine dreidimensionale (3D) Kamera (332b) umfasst.

8. Transportsystem nach einem der Ansprüche 1 bis 7, wobei die Verlagerungsverfolgungseinheit (300) ferner eine Kombination aus mindestens einer odometrische Vorrichtung (340) und mindestens einer zusätzlichen Neigungsmessvorrichtung (350) umfasst, wobei die odometrische Vorrichtung (340) eingerichtet ist, um eine von dem Fahrzeug (100) in Bezug auf einen Referenzpunkt durchfahrene Distanz zu messen, und die zusätzliche Neigungsmessvorrichtung (350) vorgesehen ist, um einen Neigungswinkel zwischen der Längsachse des Fahrzeugs (100) und einer Achse, die senkrecht zu der Richtung der Erdanziehungskraft ist, in einer sagittalen Ebene des Fahrzeugs (100) zu messen.

9. Transportsystem nach einem der Ansprüche 1 bis 8, wobei die Steuervorrichtung (210) ein Antriebssystem (211) umfasst, um Antriebsräder anzutreiben, die von mindestens einer der Achsen (120, 130) des Fahrzeugs (100) getragen werden, wobei die Steuervorrichtung (210) ferner vorgesehen ist, um die Antriebsgeschwindigkeit der Antriebsräder in Abhängigkeit von den von der Verlagerungsverfolgungseinheit (300) ausgegebenen Daten zu steuern.

10. Transportsystem nach einem der Ansprüche 1 bis 9, wobei die Lenkeinheit (200) vollständig automatisch funktioniert, was eine automatische Lenkung des Fahrzeugs (100) in Abhängigkeit von den Daten der Verlagerungsverfolgungseinheit (300) ermöglicht.

## Claims

1. A transport system for a tunnel, comprising at least one vehicle (100) with tires and one unit (200) for piloting the vehicle (100), said vehicle (100) having a generally longitudinal frame (110) and at least two axles (120, 130) pivotally mounted under the frame (110) at each end of the frame, each axle carrying wheels mounted on the tires, and the piloting unit (200) comprising a control device (210) provided to control the at least two axles (120, 130) of the vehicle (100),
**characterized in that** it comprises a motion tracking unit (300) comprising a combination of at least one telemetric device (310) and at least one inclinometer device (320), wherein the telemetric device (310) is provided for measuring a distance between the vehicle (100) and each of the side walls of the tunnel, and the inclinometer device (320) is provided for measuring an angle of inclination between an axis normal to the mid-plane formed by the frame and the earth's gravity direction in a front plane of said vehicle (100), the inclinometer device (320) comprising a plurality of inclinometers (321), the vehicle (100) having at least one axle (120, 130) comprising at least two inclinometers (321) positioned symmetrically with respect to the longitudinal axis of the vehicle (100),
and **in that** the piloting unit (200) further comprises a data processing device (220) for receiving and processing data of the motion tracking unit (300) and monitoring the control device (210) according to the processed data, the data processing device (220) being provided to cooperate with the control device (210) for controlling at least one rotation of at least one of the two axles (120, 130) of the vehicle (100) according to the distances measured by the telemetric device (310) when the transport system is traveling on a flat portion of the tunnel and according to the angle of inclination measured by the inclinometer device (320) when the transport system is traveling on a curved portion of the tunnel.

2. The transport system according to claim 1, wherein the telemetric device (310) comprises at least four distance sensors (311), preferably laser distance sensors, where at least two distance sensors (311) are arranged on either side of the vehicle (100) at one end of the frame (110) of the vehicle (100).

3. The transport system according to any one of claims 1 and 2, wherein the motion tracking unit (300) further comprises an obstacle detection device (330) present in a motion area of the transport system, said obstacle detection device (330) comprising a short-range detection system (331) for a detection of obstacles present between the front end of the vehicle (100) in the direction of motion and a first detection distance (D1), and a long-range detection system (332) for a detection of obstacles present beyond the first detection distance (D1) up to a second detection distance (D2).

4. The transport system according to claim 3, wherein the first detection distance (D1) is comprised between 5 m and 10 m, and is preferably of 8 m, and the second detection distance (D2) is comprised between 30 m and 70 m, and is preferably of 50 m.

5. The transport system according to any one of claims 3 and 4, wherein the short-range detection system (331) comprises a plurality of ultrasonic sensors, at least part of said ultrasonic sensors being positioned at the front end of the vehicle (100) in the direction of motion.

6. The transport system according to any one of claims 3 to 5, wherein the long-range detection system (332) comprises a two-dimensional (2D) or three-dimensional (3D) laser scanner (332a).

7. The transport system according to any one of claims 3 to 6, wherein the long-range detection system (332) comprises a three-dimensional (3D) camera (332b).

8. The transport system according to any one of claims 1 to 7, wherein the motion tracking unit (300) further comprises a combination of at least one odometer device (340) and at least one additional inclinometer device (350), wherein the odometer device (340) is arranged for measuring a distance traveled by said vehicle (100) relative to a reference point, and the additional inclinometer device (350) is provided for measuring an angle of inclination between the longitudinal axis of the vehicle (100) and an axis perpendicular to the earth's gravity direction in a sagittal plane of said vehicle (100).

9. The transport system according to any one of claims 1 to 8, wherein the control device (210) comprises a driving system (211) designed to drive driving wheels carried by at least one of the axles (120, 130) of the vehicle (100), the control device (210) being further provided to control the driving speed of the driving wheels according to the data from the motion tracking unit (300).

10. The transport system according to any one of claims 1 to 9, wherein the piloting unit (200) has a fully automated operation allowing an automatic piloting of the vehicle (100) according to the data of the motion tracking unit (300).
